# EUROPEAN PATENT SPECIFICATION

(11) **EP 4 289 100 B1**
(45) Date of publication and mention of the grant of the patent: **04.11.2026**
(21) Application number: 21924466.2
(22) Date of filing: 28.12.2021
(51) Int. Cl.: H04L 7/00, H04J 3/06, H02J 13/00

(54) **METHOD AND APPARATUS FOR CLOCK DISTRIBUTION IN NETWORK**
VERFAHREN UND VORRICHTUNG ZUR TAKTVERTEILUNG IN EINEM NETZWERK
PROCÉDÉ ET APPAREIL DE DISTRIBUTION D'HORLOGE DANS UN RÉSEAU

(30) Priority: 05.02.2021 WO PCT/CN2021/075573
(43) Date of publication of application: 13.12.2023
(73) Proprietor: Telefonaktiebolaget LM Ericsson (publ), 164 83 Stockholm (SE)
(72) Inventor: GAO, Guoliang, Beijing 100102 (CN); ZHOU, Chengxing, Beijing 100102 (CN); PENG, Yao, Beijing 100102 (CN)
(74) Representative: Ericsson
(86) International application number: PCT/CN2021/141996
(87) International publication number: WO 2022/166473

(56) References cited:
- WO-A1-2015/036721
- WO-A1-2020/252797
- CN-A- 102 388 556
- US-A1- 2015 364 953
- US-A1- 2016 095 075
- US-A1- 2019 327 010
- LEE COSART MICROSEMI ET AL: "Draft Amendment 1 to Recommendation ITU-T G.8275.1/Y.1369.1 (2014) (for Consent, 26 February 2016);TD 539 (PLEN/15)", ITU-T DRAFT ; STUDY PERIOD 2013-2016, INTERNATIONAL TELECOMMUNICATION UNION, GENEVA ; CH, vol. 13/15, 23 February 2016 (2016-02-23), pages 1 - 23, XP044166569

## Description

### TECHNICAL FIELD

The present disclosure relates generally to the technology of communication network, and in particular, to a method and an apparatus for clock distribution in network.

### BACKGROUND

This section introduces aspects that may facilitate a better understanding of the disclosure. Accordingly, the statements of this section are to be read in this light and are not to be understood as admissions about what is in the prior art or what is not in the prior art.

In a communication network (such as Ethernet), the clock synchronization between different apparatus is very important for a collaboration and communication with each other. Clock distribution apparatus cascaded in the network distribute the clock signal received from clock source to each apparatus in the network, such as a terminal device.

One clock distribution apparatus may receive clock signals from one or more clock sources (directly or via one or more intermedia clock distribution apparatuses), and then distribute a clock signal from a selected clock source to further downstream devices (including another clock distribution apparatus or terminal device).

Document US 2015 / 0 364 953 A1 discloses a technique for adaptive holdover time error estimation. A system may include a local time source configured to generate a local time signal and an external time source interface configured to receive an external time signal. A time source subsystem may be configured to compare the local time signal and the external time signal and to determine a temperature-dependent signal drift rate of the local time signal relative to the external time signal. The time source sub-system may be a time-dependent signal drift rate of the local time signal relative to the external time signal. A holdover subsystem may detect a loss of reception of the external time signal during a holdover period and may estimate a total maximum error based on an estimated maximum time-dependent error and an estimated maximum temperature-dependent error.

Document "Draft Amendment 1 to Recommendation ITU-T G.8275.1/Y.1369.1 (2014) (for Consent, 26 February 2016), TD 539 (PLEN/15)", ITU-T draft, Study period 2013-2016, discloses an evaluation of the Precision Time Protocol (PTP) of IEEE 1588 and of the Best Master Clock Algorithm to select the best clock to be distributed in a network.

### SUMMARY

Certain aspects of the present disclosure and their embodiments may provide solutions to these or other challenges. There are, proposed herein, various embodiments which address one or more of the issues disclosed herein.

It is possible in the network for the clock distribution apparatus to lose clock signals from these clock sources.

When clock distribution apparatuses in the network lose clock signals from clock sources, an upstream clock distribution apparatus may operate based on an inputted frequency reference, or a local oscillator, etc, and a downstream clock distribution apparatus may try to select one upstream clock distribution apparatus for clock synchronization.

However, it is hard for a downstream clock distribution apparatus to obtain some specific performance information of an upstream clock distribution apparatus in such situation. Thus, the selection of upstream clock distribution apparatus might be not optimal.

Embodiments of the present disclosure may provide improvement for such situations.

According to a first aspect of the present disclosure, there is provided a method performed by a first clock distribution apparatus. The method comprises determining whether the first clock distribution apparatus is in a first state, wherein the first state is a holdover state; generating information indicating a remaining time duration for the first clock distribution apparatus keeping a preconfigured accuracy, when the first clock distribution apparatus is in the first state, wherein the information indicating the remaining time duration comprises a remaining holdover budget and a drift rate, and the remaining time duration is calculated, via subtracting the remaining holdover budget by a transmission path time error, and dividing the subtracted remaining holdover budget by the drift rate, and transmitting the information indicating the remaining time duration.

According to a second aspect of the present disclosure, there is provided a method performed by a second clock distribution apparatus. The method comprises receiving information indicating at least one remaining time duration for at least one first clock distribution apparatus keeping a preconfigured accuracy, wherein the at least one first clock distribution apparatus is in a first state, wherein the first state is a holdover state, the information indicating the remaining time duration comprises a remaining holdover budget and a drift rate, and the remaining time duration is calculated, via subtracting the remaining holdover budget by a transmission path time error, and dividing the subtracted remaining holdover budget by the drift rate; and selecting one of the at least one first clock distribution apparatus, based on the information.

According to a third aspect of the present disclosure, there is provided a method performed by a third clock distribution apparatus. The method comprises receiving information indicating a remaining time duration for a first clock distribution apparatus (100) keeping a preconfigured accuracy, wherein the first clock distribution apparatus in a first state, wherein the first state is a holdover state, and the information indicating the remaining time duration comprises a remaining holdover budget and a drift rate; updating the information indicating the remaining time duration, wherein the remaining time duration is calculated, via subtracting the remaining holdover budget by a transmission path time error, and dividing the subtracted remaining holdover budget by the drift rate; and transmitting the updated information.

According to a fourth aspect of the present disclosure, there is provided a first clock distribution apparatus, comprising a processor and a memory, containing instructions executable by the processor, wherein the first clock distribution apparatus is operative to determine whether the first clock distribution apparatus is in a first state, wherein the first state is a holdover state; generate information indicating a remaining time duration for the first clock distribution apparatus keeping a preconfigured accuracy, when the first clock distribution apparatus is in the first state, wherein the information indicating the remaining time duration comprises a remaining holdover budget and a drift rate, and the remaining time duration is calculated, via subtracting the remaining holdover budget by a transmission path time error, and dividing the subtracted remaining holdover budget by the drift rate; and transmit the information indicating the remaining time duration.

According to a fifth aspect of the present disclosure, there is provided a second clock distribution apparatus, comprising a processor and a memory, containing instructions executable by the processor; wherein the second clock distribution apparatus is operative to receive information indicating at least one remaining time duration for at least one first clock distribution apparatus keeping a preconfigured accuracy, wherein the at least one first clock distribution apparatus is in a first state, wherein the first state is a holdover state, the information indicating the remaining time duration comprises a remaining holdover budget and a drift rate, and the remaining time duration is calculated, via subtracting the remaining holdover budget by a transmission path time error, and dividing the subtracted remaining holdover budget by the drift rate; and select one of the at least one first clock distribution apparatus, based on the information.

According to a sixth aspect of the present disclosure, there is provided a third clock distribution apparatus, comprising a processor and a memory, containing instructions executable by the processor, wherein the third clock distribution apparatus is operative to receive information indicating a remaining time duration for a first clock distribution apparatus keeping a preconfigured accuracy, wherein the first clock distribution apparatus is in a first state, wherein the first state is a holdover state, and the information indicating the remaining time duration comprises a remaining holdover budget and a drift rate; update the information indicating the remaining time duration, wherein the remaining time duration is calculated, via subtracting the remaining holdover budget by a transmission path time error, and dividing the subtracted remaining holdover budget by the drift rate; and transmit the updated information.

Whenever in the following disclosure any feature of the aspects (independent claims) just referenced is disclosed as "optional" (e.g., due to usage of conjunctive terms, such as "can", "may", "should" etc.), it is nevertheless to be read as "mandatory".

For example, there is a method performed by a first clock distribution apparatus. The method may comprise: determining whether the first clock distribution apparatus is in a first state; generating information indicating a remaining time duration for the first clock distribution apparatus keeping a preconfigured accuracy, when the first clock distribution apparatus is in the first state, and transmitting the information indicating the remaining time duration.

For example, the first clock distribution apparatus may enter the first state after losing a synchronization with a clock source.

For example, the clock source may comprise a Grandmaster, GM, apparatus.

For example, the first state may be a holdover state.

For example, the information indicating the remaining time duration may comprise a remaining holdover budget, and/or a drift rate.

For example, the remaining time duration may be calculated, via dividing the remaining holdover budget by the drift rate.

For example, the information indicating the remaining time duration may be presented in a type length value format.

For example, the information indicating the remaining time duration may be included in an announce message.

For example, the announce message may be a Precision Time Protocol, PTP, message.

For example, the first clock distribution apparatus may comprise: a Telecom Boundary Clock, T-BC, apparatus.

For example, there is a method performed at a second clock distribution apparatus. The method may comprise: receiving information indicating at least one remaining time duration for at least one first clock distribution apparatus keeping a preconfigured accuracy. The at least one first clock distribution apparatus may be in a first state. The method may further comprise: selecting one of the at least one first clock distribution apparatus, based on the information.

For example, the first state may be a holdover state.

For example, the information indicating the remaining time duration may comprise a remaining holdover budget, and/or a drift rate.

For example, the remaining time duration may be calculated, via subtracting the remaining holdover budget by a transmission path time error, and dividing the subtracted remaining holdover budget by the drift rate.

For example, the selected one of the at least one first clock distribution apparatus may have a maximum remaining time duration among the at least one first clock distribution apparatus.

For example, the information indicating the remaining time duration may be presented in a type length value format.

For example, the information indicating the remaining time duration may be included in an announce message.

For example, the announce message may be a Precision Time Protocol, PTP, message.

For example, the second clock distribution apparatus may comprise: a Telecom Boundary Clock, T-BC, apparatus.

For example, there is a method performed at a third clock distribution apparatus. The method may comprise: receiving information indicating a remaining time duration for a first clock distribution apparatus keeping a preconfigured accuracy. The first clock distribution apparatus may be in a first state. The method may further comprise: updating the information indicating the remaining time duration; and transmitting the updated information.

For example, the information indicating the remaining time duration may comprise a remaining holdover budget, and/or a drift rate.

For example, updating the information may comprise subtracting the remaining holdover budget by a transmission path time error.

For example, the remaining time duration may be calculated, via dividing the subtracted remaining holdover budget by the drift rate.

For example, the first state may be a holdover state.

For example, the information indicating the remaining time duration may be presented in a type length value format.

For example, the information indicating the remaining time duration may be included in an announce message.

For example, the announce message may be a Precision Time Protocol, PTP, message.

For example, the third clock distribution apparatus may comprise: a Telecom Boundary Clock, T-BC, apparatus.

For example, there is a first clock distribution apparatus. The first clock distribution may comprise: a processor; and a memory, containing instructions executable by the processor. The first clock distribution apparatus may be operative to: determine whether the first clock distribution apparatus is in a first state; generate information indicating a remaining time duration for the first clock distribution apparatus keeping a preconfigured accuracy, when the first clock distribution apparatus is in the first state; and transmit the information indicating the remaining time duration.

For example, the first clock distribution apparatus may be further operative to implement the method according to any of embodiments described above.

For example, there is a second clock distribution apparatus. The second clock distribution apparatus may comprise: a processor; and a memory, containing instructions executable by the processor. The second clock distribution apparatus may be operative to: receive information indicating at least one remaining time duration for at least one first clock distribution apparatus keeping a preconfigured accuracy. The at least one first clock distribution apparatus may be in a first state. The second clock distribution apparatus may be further operative to: select one of the at least one first clock distribution apparatus, based on the information.

For example, the second clock distribution apparatus may be further operative to implement the method according to any of embodiments described above.

For example, there is a third clock distribution apparatus. The third clock distribution apparatus may comprise: a processor; and a memory, containing instructions executable by the processor. The third clock distribution apparatus may be operative to: receive information indicating a remaining time duration for a first clock distribution apparatus keeping a preconfigured accuracy. The first clock distribution apparatus may be in a first state. The third clock distribution apparatus may be further operative to: update the information indicating the remaining time duration; and transmit the updated information.

For example, the third clock distribution apparatus may be further operative to implement the method according to any of embodiments described above.

For example, there is a computer readable storage medium having a computer program stored thereon. The computer program may be executable by a device to cause the device to carry out the method according to any of embodiments described above.

For example, a downstream clock distribution apparatus may obtain more information about an upstream clock distribution apparatus. Particularly, a downstream clock distribution apparatus may obtain how long the first clock distribution apparatus will keep a preconfigured accuracy. Such time duration may be used as one of parameters for selecting an upstream clock distribution apparatus. The selection of a better clock distribution apparatus may be achieved.

### BRIEF DESCRIPTION OF DRAWINGS

Through the more detailed description of some embodiments of the present disclosure in the accompanying drawings, the above and other objects, features and advantages of the present disclosure will become more apparent, wherein the same reference generally refers to the same components in the embodiments of the present disclosure.
FIG. 1A is a diagram showing a state of physical layer frequency-assisted holdover.
FIG. 1B is a diagram showing a state of unassisted holdover.
FIG. 1C is a flow chart showing a part of an exemplary BMCA algorithm.
FIG. 1D is a flow chart showing another part of an exemplary BMCA algorithm.
FIG. 2 is a diagram showing a simplified network, in which a BMCA is implemented.
FIG. 3 is an exemplary flow chart showing a method performed by a clock distribution apparatus, according to embodiments of the present disclosure.
FIG. 4 is an exemplary diagram showing a state machine of the clock distribution apparatus.
FIG. 5 is a diagram showing an exemplary data structure of the information indicating the remaining time duration, according to embodiments of the present disclosure.
FIG. 6 is a block diagram showing an example architecture and task modules of a clock distribution apparatus, according to embodiments of the present disclosure.
FIG. 7 is a flow chart showing an example procedure for holdover state, according to embodiments of the present disclosure.
FIG. 8A is an exemplary flow chart showing another method performed by a clock distribution apparatus, according to embodiments of the present disclosure.
FIG. 8B is another exemplary flow chart showing still another method performed by a clock distribution apparatus, according to embodiments of the present disclosure.
FIG. 9 is an exemplary flow chart showing an improved method performed by a clock distribution apparatus to select best master.
FIG. 10 is a block diagram showing a clock distribution apparatus in accordance with embodiments of the present disclosure.
FIG. 11 is a block diagram showing a computer readable storage medium in accordance with embodiments of the present disclosure.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Reference throughout this specification to features, advantages, or similar language does not imply that all of the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

As used herein, the term "network", or "communication network/ system" refers to a network/ system following any suitable communication standards, such as new radio (NR), long term evolution (LTE), LTE-Advanced, wideband code division multiple access (WCDMA), high-speed packet access (HSPA), and so on. Furthermore, the communications between a terminal device and a network node in the communication network may be performed according to any suitable generation communication protocols, including, but not limited to, the first generation (1G), the second generation (2G), 2.5G, 2.75G, the third generation (3G), 4G, 4.5G, 5G communication protocols, and/or any other protocols either currently known or to be developed in the future.

The term "apparatus" herein may refer to any end device that can access a communication network and receive services therefrom. By way of example and not limitation, the apparatus comprises a terminal device, and further the terminal device may refer to a user equipment (UE), or other suitable devices. The UE may be, for example, a subscriber station, a portable subscriber station, a mobile station (MS) or an access terminal (AT). The terminal device may include, but not limited to, portable computers, image capture terminal devices such as digital cameras, gaming terminal devices, music storage and playback appliances, a mobile phone, a cellular phone, a smart phone, a tablet, a wearable device, a personal digital assistant (PDA), a vehicle, and the like.

As yet another specific example, in an Internet of things (IoT) scenario, a terminal device may also be called an IoT device and represent a machine or other device that performs monitoring, sensing and/or measurements etc., and transmits the results of such monitoring, sensing and/or measurements etc. to another terminal device and/or a network equipment. The terminal device may in this case be a machine-to-machine (M2M) device, which may in a 3rd generation partnership project (3GPP) context be referred to as a machine-type communication (MTC) device.

As one particular example, the terminal device may be a UE implementing the 3GPP narrow band Internet of things (NB-IoT) standard. Particular examples of such machines or devices are sensors, metering devices such as power meters, industrial machinery, or home or personal appliances, e.g. refrigerators, televisions, personal wearables such as watches etc. In other scenarios, a terminal device may represent a vehicle or other equipment, for example, a medical instrument that is capable of monitoring, sensing and/or reporting etc. on its operational status or other functions associated with its operation.

As used herein, the terms "first", "second" and so forth refer to different elements. The singular forms "a" and "an" are intended to include the plural forms as well, unless the context clearly indicates otherwise. The terms "comprises", "comprising", "has", "having", "includes" and/or "including" as used herein, specify the presence of stated features, elements, and/or components and the like, but do not preclude the presence or addition of one or more other features, elements, components and/or combinations thereof. The term "based on" is to be read as "based at least in part on". The term "one embodiment" and "an embodiment" are to be read as "at least one embodiment". The term "another embodiment" is to be read as "at least one other embodiment". Other definitions, explicit and implicit, may be included below.

In a communication network, the clock synchronization may be achieved by applying some standard protocol, such as IEEE (Institute of Electrical and

Electronic Engineers) 1588v2 (also known as Precision Time Protocol, PTP), which is an industry-standard protocol that enables the precise transfer of frequency and time to synchronize clocks over packet-based Ethernet networks. It synchronizes the local slave clock on each network device with a system Grandmaster clock and uses traffic time stamping, with sub-nanoseconds granularity, to deliver the very high accuracies of synchronization needed to ensure the stability of frequency of devices in the network (such as a base station) and handovers. Timestamps between master and slave devices are sent within specific PTP packets and its basis form the protocol is administration-free.

For example, a standard specification ITU-T (International Telecommunication Union Telecommunication Standardization Sector) G.8275.1 profile defines a specific architecture to allow the distribution of phase/time with full timing support network. The profile is based on the PTP defined in IEEE1588v2.

According to IEEE1588v2, BC is a boundary clock with multiple PTP Ports connecting to multiple GM (grandmaster). One of these ports may be at "Slave" state, and the remaining PTP Ports should be at "Passive" or "Master" state, which is decided by BMCA (best master clock algorithm). The Slave port will have higher priority to calibrate the frequency and time from received time stamped packets. And the frequency and time will be delivered to downstream clock via the Master ports.

In a synchronization network, there are usually two clock sources (e.g. PRTC (Primary Reference Time Clock) or PTP (Precision Time Protocol) GM) deployed, and one is the primary, another is secondary. T-BC in the network will choose the best one according to the BMCA (Best Master Clock Algorithm). When the device lost its sync source, it will enter a holdover state, which can be further specified as holdover-in-spec (holdover in specification) with clockClass value 135, and holdover-out-spec (holdover out of specification) with clockClass value 165.The clockClass values are defined in "Table 2 - Applicable clockClass values" of "Rec. (Recommendation) ITU-T G.8275.1/Y.1369.1 (03/2020)". When the device is in holdover state, the quality of output clock will depend on either physical layer frequency input (a.k.a. L1 (layer 1) assist Holdover) or local oscillator (a.k.a. L1 unassisted holdover), these two types of holdover are de fined in "III.4 Holdover" of "Rec. ITU-T G.8273.2/Y.1368.2 (06/2016)". So, if all the clock sources enter into holdover state and clockclass value are all 135.The BMCA algorithm may choose the clock source with lower accuracy and the whole network performance will change quickly and frequently.

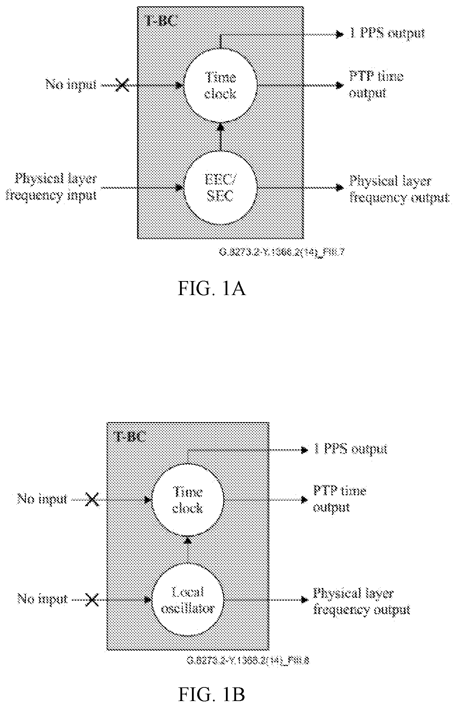

FIG. 1A is a diagram showing a state of physical layer frequency-assisted holdover. FIG. 1B is a diagram showing a state of unassisted holdover.

As shown in FIG. 1A and FIG. 1B, there are two types of holdover available in a T-BC. The first is that the T-BC loses its PTP time reference, but not the physical layer frequency reference, as shown in FIG. 1A (Figure III.7 of Rec. ITU-T G.8273.2/Y.1368.2). In this case, the stable frequency reference is used to keep the time output "ticking" at approximately the correct rate. Since the long-term frequency of the physical layer frequency is traceable to a PRC (primary reference clock), this is likely to maintain the correct time over a reasonable period of time.

The second type is where both inputs are lost simultaneously, as shown in FIG. 1B (Figure III.8 of Rec. ITU-T G.8273.2/Y.1368.2). The time output is then maintained using the local oscillator, but this is not expected to maintain accurate time for more than a few seconds, due to the much bigger drift rate of the local oscillator.

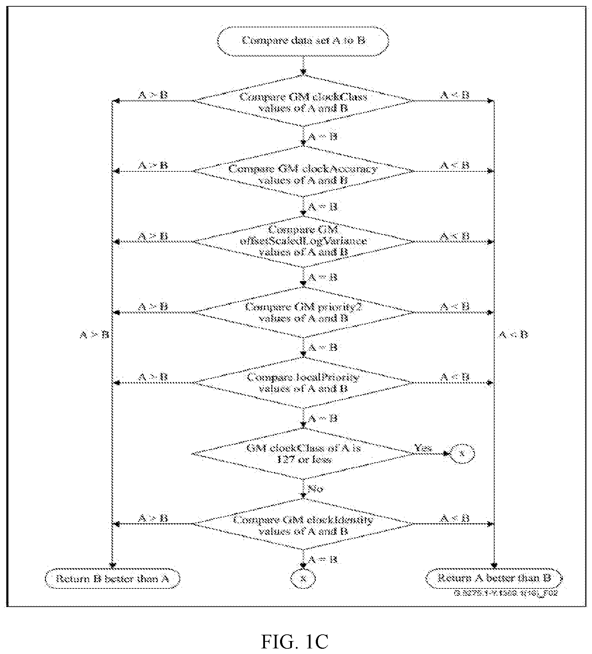

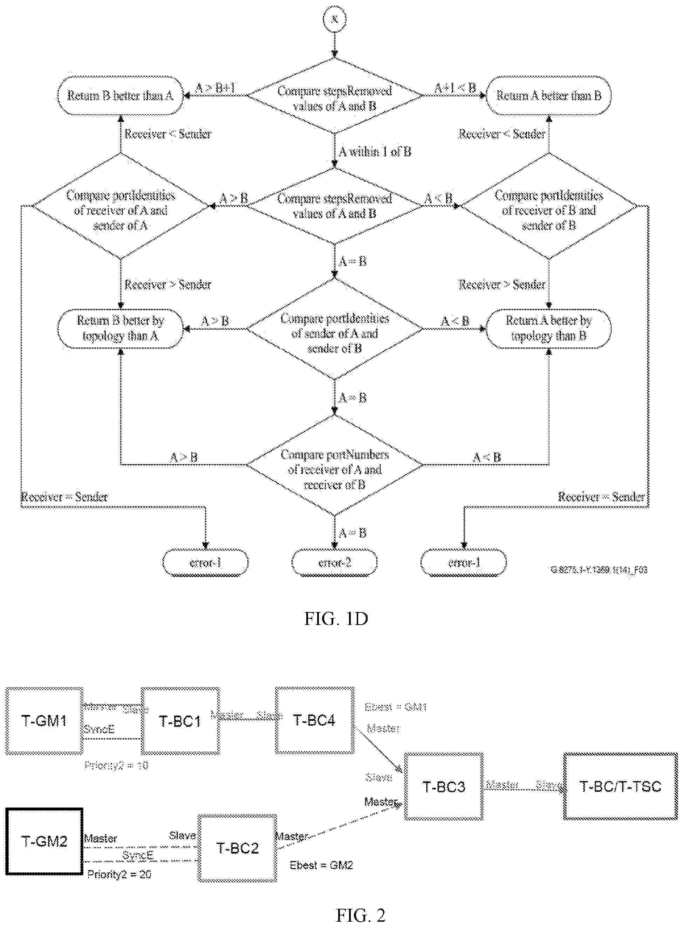

FIG. 1C is a flow chart showing a part of an exemplary BMCA algorithm. FIG. 1D is a flow chart showing another part of an exemplary BMCA algorithm.

If the T-BC enters into holdover-in-spec state, the clockClass value will be 135 for both with L1 assist and without L1 assist, the clockAccuracy and offsetScaledLogVariance are also the same. This is defined in "6.3.5 Other clock attributes" of "Rec. ITU-T G.8275.1/Y.1369.1". So, the T-BC clock in holdover-in-spec state with the smaller stepsRemoved, clockIdentity or portIdentity will be chosen as the best clock according to the BMCA algorithm defined in an exemplary BMCA algorithm, "6.3 Protection aspects and Alternate BMCA" of "Rec. ITU-T G.8275.1/Y.1369.1" as shown in FIG. 1C and FIG. 1D.

Fields in the algorithm is illustrated below.

GM Identity refers to the ID to identify a grand master clock.

GM Priority1 refers to a user configurable designation on grand master that presents the priority of the grand master clock. The value can be 0 to 255. A smaller value has higher priority.

GM Class presents the clock class of the grand master. It is an attribute that defines a clock's TAI (International Atomic Time) traceability. The candidate values are defined in IEEE1588 2018.

GM Accuracy is used to present the accuracy of the grand master. For example, it can be 0x20, which means the clock has accuracy of 25ns. The candidate values are defined in IEEE1588 2018.

GM offsetScaledLogVariance is used to present the dynamic accuracy behavior of the grand master. It presents the rate of change of GM accuracy which presents the static accuracy.

GM Priority2 is a user configurable designation on grand master that presents the priority of the grand master clock. The value can be 0 to 255. A smaller value has higher priority.

It is desired to select a best upstream clock, according to such BMCA algorithm. However, some specific performance of an upstream clock distribution apparatus is not considered in such BMCA algorithm. Thus, the selection of an upstream clock (such as an upstream clock distribution apparatus) might be not optimal. If the chosen T-BC has a rather worse performance in some aspect. The performance of whole network will be affected.

That is, in ITU-T G.8275.1, even the BMCA selection for the Boundary Clock is defined, it doesn't define any mechanism to choose the clock source with the best output performance in some cases.

FIG. 2 is a diagram showing a simplified network, in which a BMCA is implemented.

For example, with reference to FIG. 2, the T-GM (telecom grandmaster) 1 has priority2=10, T-GM2 has priority2=20. For T-BC4, the best one is GM1 (Ebest = GM1), and for T-BC2, the best one is GM 2 (Ebest = GM2). When the T-GM1 and the T-GM 2 are both available, (such as for T-BC3), the T-GM1 will be chosen as the clock source according to the BMCA.

After a long time, if the T-BC2 lost T-GM2 clock source (PTP and SyncE (a physical layer frequency input) are lost at the same time), but T-BC1 only lost T-GM1 PTP clock source. T-BC1 and T-BC2 are all in holdover-in-spec state.

Then, T-BC1 send out the clockclass = 135 to its downstream T-BC4, and T-BC4 transmit the announce message including the T-BC1 clock information to T-BC3. T-BC2 sends out the clockclass = 135 to its downstream T-BC3. Since the T-BC2 has smaller clock identity or port identity than T-BC1, so at that time, the T-BC3 will switch from T-BC1 (which is previously associated to T-GM1) to T-BC2 according to the BMCA immediately.

However, the T-BC2's time error will drift out of a preconfigured accuracy (threshold) 400ns in a short time, and the T-BC2 will enter into holdover-out-of-spec state, in which it will change the clockclass = 165. And the whole network performance will drift out of 400ns, too.

On the other side, the T-BC1 is using physical layer frequency input, so its drift rate is less than T-BC2. When T-BC2 is in holdover-out-of-spec state, the T-BC1 is still in holdover-in-spec state.

The T-BC3 will switch to the T-BC4 immediately according to the Alternate BMCA algorithm "6.3 Protection aspects and Alternate BMCA" which is defined in "Rec. ITU-T G.8275.1/Y.1369.1 (07/2014)", since the T-BC1 in holdover-in-spec state has a higher priority over the T-BC2 in holdover-out-of-spec state.

The whole network performance will jump back immediately. If it is a big jump, that will cause a problem when the downstream (such as any downstream T-BC/T-TSC (telecom time slave clock)) of T-BC3 is sensitive to the phase/time changing. For example, if the T-BC1 time error drifts out of 10ns, T-BC3 will change the drift from 400ns to 10ns, so there is about 390ns phase jump, which might affect some sensitive downstream devices.

Embodiments of the present disclosure introduces a mechanism for improving such BMCA.

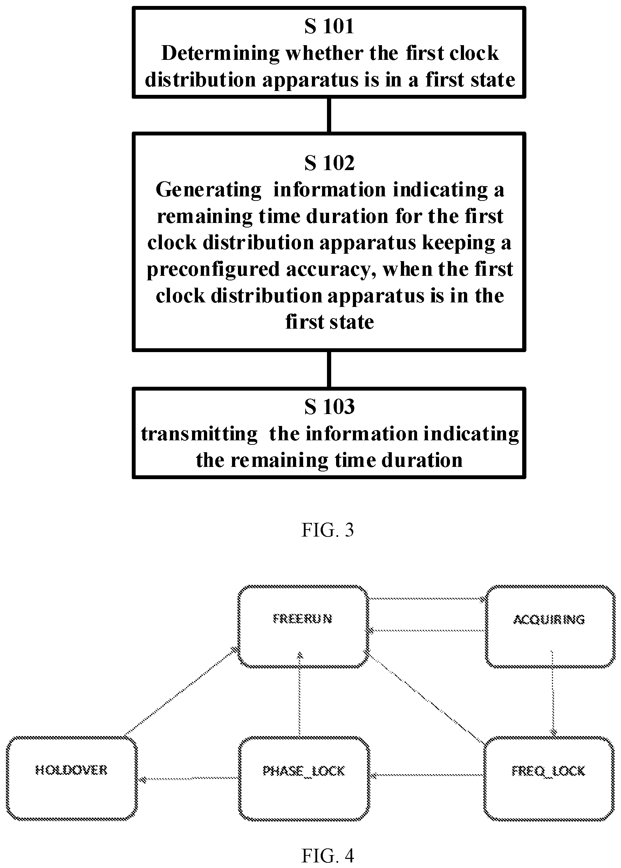

FIG. 3 is an exemplary flow chart showing a method performed by a clock distribution apparatus, according to embodiments of the present disclosure.

As shown in FIG. 3, a first aspect of the present disclosure provides a method performed at a first clock distribution apparatus. The method may comprise: S101, determining whether the first clock distribution apparatus is in a first state; S102, generating information indicating a remaining time duration for the first clock distribution apparatus keeping a preconfigured accuracy, when the first clock distribution apparatus is in the first state, and S103, transmitting the information indicating the remaining time duration.

According to embodiments of the present disclosure, a downstream clock distribution apparatus may obtain more information about an upstream clock distribution apparatus. Particularly, a downstream clock distribution apparatus may obtain how long the first clock distribution apparatus will keep a preconfigured accuracy in a first state.

Such time duration may be used as one of parameters for selecting an upstream clock distribution apparatus. The selection of a better upstream clock distribution apparatus may be achieved.

In embodiments of the present disclosure, the clock source may comprise a Grandmaster, GM, apparatus.

In embodiments of the present disclosure, the first clock distribution apparatus may comprise: a Telecom Boundary Clock, T-BC, apparatus.

For example, the first clock distribution apparatus may comprise the T-BC1, T-BC2 as shown in FIG. 2.

FIG. 4 is an exemplary diagram showing a state machine of the clock distribution apparatus.

As shown in FIG. 4, the clock distribution apparatus may operate in any of the states "FREERUN", "ACQUIRING", "FREQUENCY LOCK", "PHASE LOCK", "HOLDOVER".

In embodiments of the present disclosure, the first clock distribution apparatus may enter the first state after losing a synchronization with a clock source.

In embodiments of the present disclosure, the first state may be a holdover state.

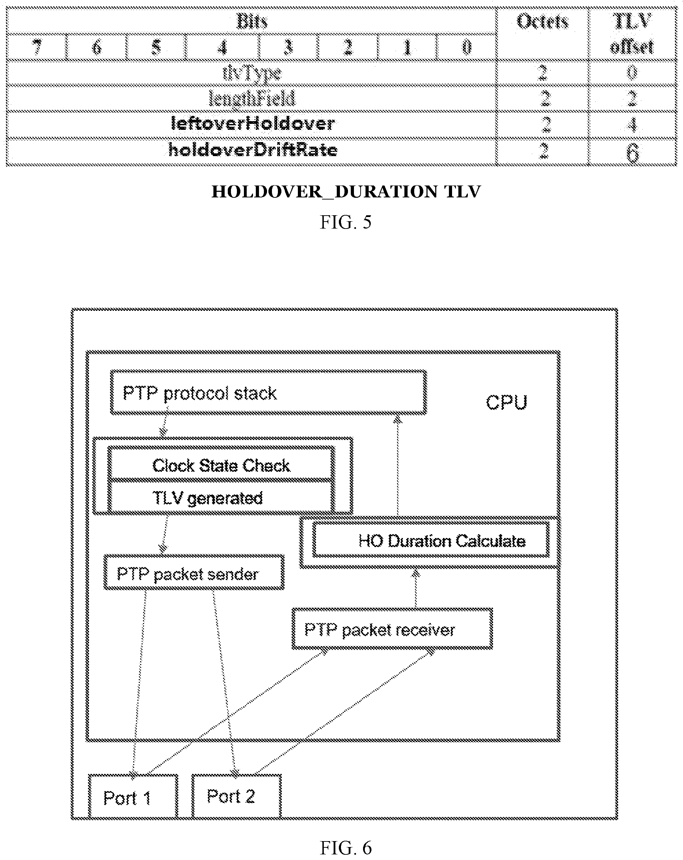

FIG. 5 is a diagram showing an exemplary data structure of the information indicating the remaining time duration, according to embodiments of the present disclosure.

In embodiments of the present disclosure, the information indicating the remaining time duration may comprise a remaining holdover budget, and/or a drift rate.

In embodiments of the present disclosure, the remaining time duration may be calculated, via dividing the remaining holdover budget by the drift rate.

In embodiments of the present disclosure, the information indicating the remaining time duration may be presented in a type length value format.

In embodiments of the present disclosure, the information indicating the remaining time duration may be included in an announce message.

In embodiments of the present disclosure, the announce message may be a Precision Time Protocol, PTP, message.

As shown in FIG. 5, for example, a specific HOLDOVER_DURATION TLV can be appended to an Announce message. The value of the data field of the HOLDOVER_DURATION TLV shall be the holdover clock source data such as the leftover holdover value (namely, the remaining holdover budget) and the holdover drift rate (for example, each parameter with two octets). The HOLDOVER_DURATION TLV can be triggered to append to Announce message only when the clock is "Holdover-In-Spec" state.

The TLV format may comprise following parameters.

### •tlvType

The value of tlvType shall indicate HOLDOVER_DURATION, and the value may be 4002.

### elengthField

The value of the lengthField may be 4.

### •leftoverHoldover

The value of leftover HO (holdover) from the clock source, the value is (holdover budget - consumed holdover budget). At each hop of clock distribution path (namely, at each clock distribution apparatus), the value should be updated (leftoverHoldover - accumulatedTimeError).

### •holdoverDriftRate

The value of drift rate of holdover from the clock source.

The HOLDOVER_DURATION TLV will be only appended from the holdover source clock (such as an upstream clock distribution apparatus previously synchronized to the grand master) in the whole network. And when the announce messages arrived at a current downstream T-BC, the leftover holdover value and the holdover drift rate will be used by the T-BC. The T-BC will further transmit the announce messages including the HOLDOVER_DURATION TLV that should subtract the Time Error value of current node (namely, an updated HOLDOVER_DURATION TLV), to further downstream.

FIG. 6 is a block diagram showing an example architecture and task modules of a clock distribution apparatus, according to embodiments of the present disclosure.

FIG. 6 shows function modules on the local clock distribution apparatus (any network equipment) to be used by this method.

Clock State Check module is a main function and triggers another module (TLV Generated) to work. This module checks whether the local clock state is "Holdover-In-Spec" or not. If the local clock state is "Holdover-In-Spec", this module triggers the next module to work.

TLV generated module will generate HOLDOVER_DURATION TLV and append the TLV to all output Announce messages.

HO Duration Calculate module will decapsulate HOLDOVER_DURATION TLV received from upstream apparatus, calculate the leftover holdover value, and calculate the leftover HO Duration Time.

As shown in FIG. 6, a PTP (Precision Time Protocol) architecture is utilized as a basis for the above functions. The clock distribution apparatus may comprise the HO Duration Calculate module to calculate left Holdover duration (such as the remaining holdover budget), based on PTP packet received from Port 1 and/or Port 2 by the PTP packet receiver.

When the clock state check module determines the clock distribution apparatus enters a first state, based on information from the PTP protocol stack, HOLDOVER_DURATION TLV will be generated. The generated TLV will be transmitted by the PTP packet sender via the Port 1 and/or Port2.

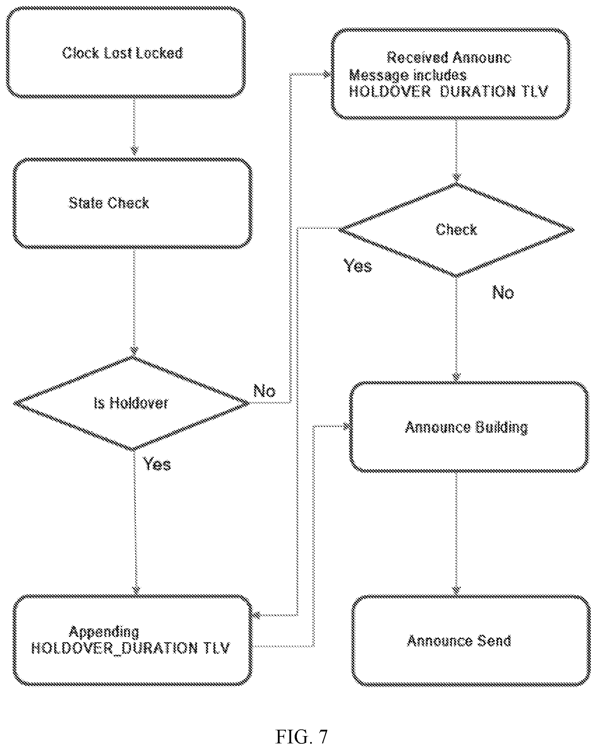

FIG. 7 is a flow chart showing an example procedure for holdover state, according to embodiments of the present disclosure.

When the clock lost locked, such procedure may be triggered.

The clock distribution apparatus may check state and determine whether it is holdover state. If yes, the clock distribution apparatus may append the HOLDOVER_DURATION TLV and build the announce message to be sent out. If no, the clock distribution apparatus may further check whether a received announce message includes the HOLDOVER_DURATION TLV.

If the received announce message includes the HOLDOVER_DURATION TLV, the HOLDOVER_DURATION TLV may be updated and then sent out. If no, the announce message will be sent out without the HOLDOVER_DURATION TLV.

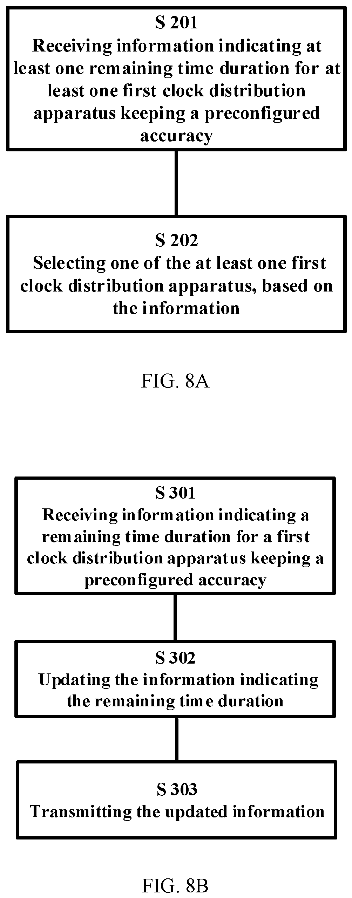

FIG. 8A is an exemplary flow chart showing another method performed by a clock distribution apparatus, according to embodiments of the present disclosure.

As shown in FIG. 8A, a second aspect of the present disclosure provides a method performed at a second clock distribution apparatus. The method may comprise: S201, receiving information indicating at least one remaining time duration for at least one first clock distribution apparatus keeping a preconfigured accuracy. The at least one first clock distribution apparatus may be in a first state. The method may further comprise: S202, selecting one of the at least one first clock distribution apparatus, based on the information.

In embodiments of the present disclosure, the second clock distribution apparatus may comprise: a Telecom Boundary Clock, T-BC, apparatus.

For example, the second clock distribution apparatus may comprise the T-BC3 as shown in FIG. 2.

In embodiments of the present disclosure, the remaining time duration may be calculated, via subtracting the remaining holdover budget by a transmission path time error, and dividing the subtracted remaining holdover budget by the drift rate.

For example, the appended HOLDOVER_DURATION TLV in announce messages is introduced for T-BC in holdover mode which is used to formulate the clock accuracy with the T-BC sync path accumulated time error.

There are several methods to conclude sync path accumulated time error as below. A first one method may be to get the leftover time error budget per manual configurated value in each node for the whole network path by operator according to the network planning. Another method may be to get the leftover time error budget per dynamically distributed method within network. e.g. a method provided by "Table 5-5 PTP Announce packet TLV format" of "China mobile Specification for Ultra-High Precision Time Synchronization", which involve a TLV that include the hop count of the higher precision device. And that TLV can be used to calculate the path accumulated time error value.

In embodiments of the present disclosure, the selected one of the at least one first clock distribution apparatus may have a maximum remaining time duration among the at least one first clock distribution apparatus.

According to embodiments of the present disclosure, the second clock distribution apparatus, which is a relative downstream apparatus and receives more than one clock (announce) messages from more than one relative upstream apparatuses, may select the upstream apparatus, at least based on information indicating the remaining time duration for keeping a preconfigured accuracy.

FIG. 8B is another exemplary flow chart showing still another method performed by a clock distribution apparatus, according to embodiments of the present disclosure.

As shown in FIG. 8B, a third aspect of the present disclosure provides a method performed at a third clock distribution apparatus. The method may comprise: S301, receiving information indicating a remaining time duration for a first clock distribution apparatus keeping a preconfigured accuracy. The first clock distribution apparatus may be in a first state. The method may further comprise: S302, updating the information indicating the remaining time duration; and S303, transmitting the updated information.

In embodiments of the present disclosure, updating the information may comprise subtracting the remaining holdover budget by a transmission path time error.

In embodiments of the present disclosure, the remaining time duration may be calculated, via dividing the subtracted remaining holdover budget by the drift rate.

In embodiments of the present disclosure, the third clock distribution apparatus may comprise: a Telecom Boundary Clock, T-BC, apparatus.

For example, the third clock distribution apparatus may comprise the T-BC4 as shown in FIG. 2.

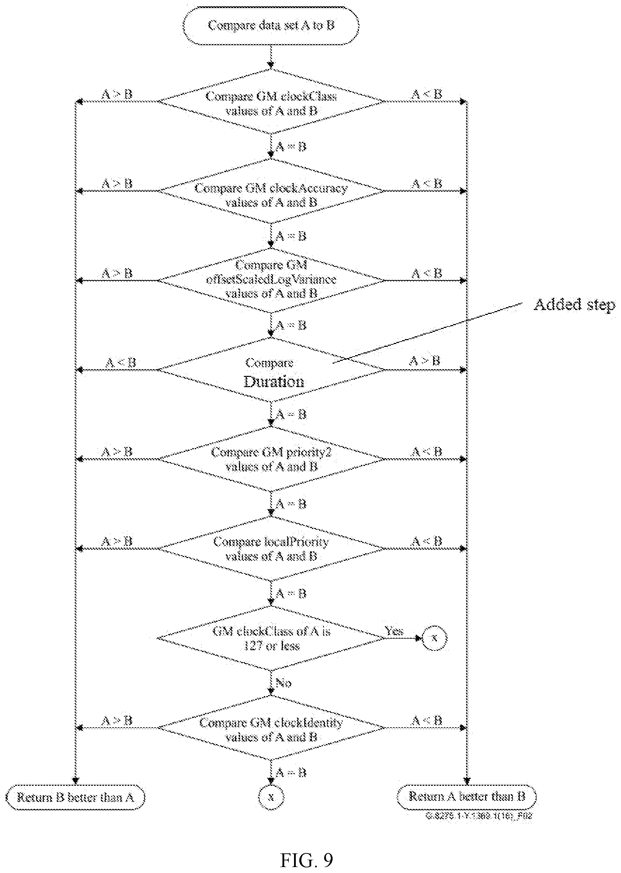

FIG. 9 is an exemplary flow chart showing an improved method performed by a clock distribution apparatus to select best master.

FIG. 9 provides improvements to "Figure 2 - Data set comparison algorithm, part 1, for Alternate BMCA" in the ITU-T G.8275.1/Y.1369.1 (03/2020).

Namely, the remaining time duration for keeping a preconfigured accuracy from different upstream apparatus will be further compared. Particularly after comparing GM offsetScaledLogVariance value, and before comparing GM priority 2 values.

Refer back to FIG. 2, for example, the T-GM1 has priority2=10, T-GM2 has priority2=20, according to the BMCA, the T-GM1 will be chosen as the clock source.

After a long time, if the T-BC2 lost T-GM2 clock source (PTP and SyncE lost at the same time), but T-BC1 only lost T-GM1 PTP clock source, T-BC1 and T-BC2 are all going into holdover-in-spec state.

T-BC1 sends out the clockclass = 135 to its downstream T-BC4, and T-BC4 transmit the announce message including the T-BC1 clock information to T-BC3. T-BC2 sends out the clockclass = 135 to their downstream T-BC3. And the announce messages include the appended HOLDOVER_DURATION TLV in T-BC1, T-BC4 and T-BC2.

The T-BC1 send its leftover holdover value for example 400ns and holdover drift value 0.01ns/s to T-BC3, and the path accumulated time error from T-BC1 to T-BC3 is 100ns (including the time error introduced by T-BC4). T-BC2 send its leftover holdover value 400ns and drift value 1ns/s to T-BC3, and the path accumulated time error from T- BC2 to T-BC3 is 50ns.

According to the formula, HO Duration Time = (leftoverHoldover - accumulatedTimeError)/ (Drift Rate). So, the Duration from T-BC1 is (400 - 100)/ (0.01) = 30000s but the Duration from T-BC2 is (400 - 50) / 1 = 350s.

Namely, with the procedure in FIG. 9, the T-BC3 will follow T-BC1 according to the formula result, so the whole network will maintain in a better situation for a long time. Although the T-BC2 has the better leftover holdover value for T-BC3, but if the T-BC3 follow the T-BC2, the T-BC3 will exceed the holdover threshold in a shorter time than following T-BC1.

According to embodiments of the present disclosure, it can be guaranteed that the grandmaster (including an upstream clock distribution apparatus previously synchronized to a clock source) with optimal performance output will be selected in the whole network.

The impact of performance changes introduced by Grandmaster switching on downstream customer service may be avoided.

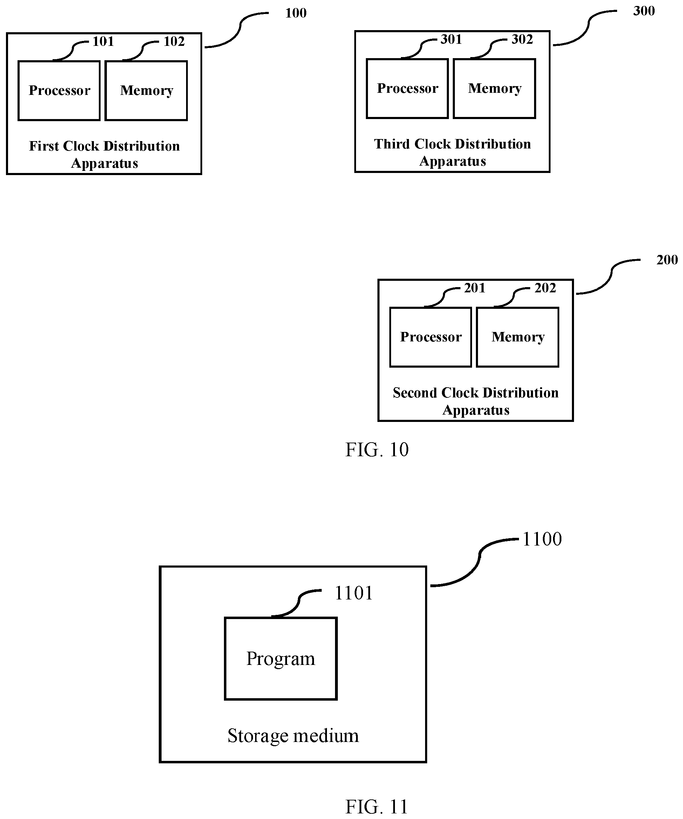

FIG. 10 is a block diagram showing a clock distribution apparatus in accordance with embodiments of the present disclosure.

As shown in FIG. 10, a fourth aspect of the present disclosure provides a first clock distribution apparatus. The first clock distribution 100 may comprise: a processor 101; and a memory 102, containing instructions executable by the processor 101. The first clock distribution apparatus 100 may be operative to: determine whether the first clock distribution apparatus is in a first state; generate information indicating a remaining time duration for the first clock distribution apparatus keeping a preconfigured accuracy, when the first clock distribution apparatus is in the first state; and transmit the information indicating the remaining time duration.

A fifth aspect of the present disclosure provides a second clock distribution apparatus. The second clock distribution apparatus 200 may comprise: a processor 201; and a memory 202, containing instructions executable by the processor 201. The second clock distribution apparatus 200 may be operative to: receive information indicating at least one remaining time duration for at least one first clock distribution apparatus keeping a preconfigured accuracy. The at least one first clock distribution apparatus may be in a first state. The second clock distribution apparatus may be further operative to: select one of the at least one first clock distribution apparatus, based on the information.

A sixth aspect of the present disclosure provides a third clock distribution apparatus. The third clock distribution apparatus 300 may comprise: a processor 301; and a memory 302, containing instructions executable by the processor 301. The third clock distribution apparatus 300 may be operative to: receive information indicating a remaining time duration for a first clock distribution apparatus keeping a preconfigured accuracy. The first clock distribution apparatus may be in a first state. The third clock distribution apparatus may be further operative to: update the information indicating the remaining time duration; and transmit the updated information.

The processors 101, 201, 301 may be any kind of processing component, such as one or more microprocessor or microcontrollers, as well as other digital hardware, which may include digital signal processors (DSPs), special-purpose digital logic, and the like. The memories 102, 202, 302 may be any kind of storage component, such as read-only memory (ROM), random-access memory, cache memory, flash memory devices, optical storage devices, etc.

In embodiments of the present disclosure, these clock distribution apparatuses 100, 200, 300 are further operative to implement any method above mentioned, such as shown in FIG. 3-9.

It should be understood, each clock distribution apparatus and/or any end equipment may comprise all these function modules or be able to perform all these methods according to embodiments of the present disclosure. The difference to perform different methods or different steps may be only caused by the current position/state of an apparatus/equipment in the network topology.

FIG. 11 is a block diagram showing a computer readable storage medium in accordance with embodiments of the present disclosure.

As shown in FIG. 11, a computer readable storage medium 1100 having a computer program 1101 stored thereon, the computer program 1101 may be executable by a device to cause the device to carry out any method above mentioned, such as shown in FIG. 3-9.

The computer readable storage medium 1100 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives.

According to embodiments of the present disclosure, a downstream clock distribution apparatus may obtain more information about an upstream clock distribution apparatus. Particularly, a downstream clock distribution apparatus may obtain how long the first clock distribution apparatus will keep a preconfigured accuracy. Such time duration may be used as one of parameters for selecting an upstream clock distribution apparatus. The selection of a better clock distribution apparatus/grandmaster may be achieved.

In general, the various exemplary embodiments of the present disclosure may be implemented in hardware or special purpose circuits, software, logic or any combination thereof. For example, some aspects may be implemented in hardware, while other aspects may be implemented in firmware or software that may be executed by a controller, microprocessor or other computing device, although the disclosure is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosure may be practiced in various components such as integrated circuit chips and modules. It should thus be appreciated that the exemplary embodiments of this disclosure may be realized in an apparatus that is embodied as an integrated circuit, where the integrated circuit may include circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by those skilled in the art, the functionality of the program modules may be combined or distributed as desired in various embodiments. In addition, the functionality may be embodied in whole or in part in firmware or hardware equivalents such as integrated circuits, field programmable gate arrays (FPGA), and the like.

| Abbreviation | Explanation |
|---|---|
| ITU-T | Telecommunication International Telecommunications Unit- |
| TE | Time Error |
| HO | Holdover |
| BMCA | Best Master Clock Algorithm |
| PTP | Precision Time Protocol |
| GM | Grandmaster |
| BC | Boundary Clock |
| OC | Ordinary Clock |
| TC | Transparent Clock |
| T-BC | Telecom Boundary Clock |
| T-GM | Telecom Grandmaster |
| T-TC | Telecom Transparent Clock |
| T-TSC | Telecom Time Slave Clock |
| NE | Network Equipment |

## Claims

1. A method performed by a first clock distribution apparatus (100), comprising:
determining (S101) whether the first clock distribution apparatus is in a first state, wherein the first state is a holdover state;
generating (S102) information indicating a remaining time duration for the first clock distribution apparatus keeping a preconfigured accuracy, when the first clock distribution apparatus is in the first state, wherein:
- the information indicating the remaining time duration comprises a remaining holdover budget and a drift rate, and
- the remaining time duration is calculated, via subtracting the remaining holdover budget by a transmission path time error, and dividing the subtracted remaining holdover budget by the drift rate, and
transmitting (S103) the information indicating the remaining time duration.

2. The method according to claim 1,
wherein the first clock distribution apparatus enters the first state after losing a synchronization with a clock source.

3. The method according to claim 2,
wherein the clock source comprises a Grandmaster, GM, apparatus.

4. The method according to any of claims 1 to 3,
wherein the information indicating the remaining time duration is presented in a type length value format.

5. The method according to any of claims 1 to 4,
wherein the information indicating the remaining time duration is included in an announce message.

6. The method according to claim 5,
wherein the announce message is a Precision Time Protocol, PTP, message.

7. The method according to any of claims 1 to 6,
wherein the first clock distribution apparatus comprises: a Telecom Boundary Clock, T-BC, apparatus.

8. A method performed by a second clock distribution apparatus (200), comprising:
receiving (S201) information indicating at least one remaining time duration for at least one first clock distribution apparatus (100) keeping a preconfigured accuracy, wherein the at least one first clock distribution apparatus is in a first state, wherein:
- the first state is a holdover state,
- the information indicating the remaining time duration comprises a remaining holdover budget and a drift rate, and
- the remaining time duration is calculated, via subtracting the remaining holdover budget by a transmission path time error, and dividing the subtracted remaining holdover budget by the drift rate; and
selecting (S202) one of the at least one first clock distribution apparatus, based on the information.

9. A method performed by a third clock distribution apparatus (300), comprising:
receiving (S301) information indicating a remaining time duration for a first clock distribution apparatus (100) keeping a preconfigured accuracy, wherein the first clock distribution apparatus is in a first state, wherein:
- the first state is a holdover state, and
- the information indicating the remaining time duration comprises a remaining holdover budget and a drift rate;
updating (S302) the information indicating the remaining time duration,
wherein the remaining time duration is calculated, via subtracting the remaining holdover budget by a transmission path time error, and dividing the subtracted remaining holdover budget by the drift rate; and
transmitting (S303) the updated information.

10. A first clock distribution apparatus (100), comprising:
a processor (101); and
a memory (102), containing instructions executable by the processor (101);
wherein the first clock distribution apparatus (100) is configured to:
determine whether the first clock distribution apparatus is in a first state,
wherein the first state is a holdover state;
generate information indicating a remaining time duration for the first clock distribution apparatus keeping a preconfigured accuracy, when the first clock distribution apparatus is in the first state, wherein:
- the information indicating the remaining time duration comprises a remaining holdover budget and a drift rate, and
- the remaining time duration is calculated, via subtracting the remaining holdover budget by a transmission path time error, and dividing the subtracted remaining holdover budget by the drift rate; and
transmit the information indicating the remaining time duration.

11. A second clock distribution apparatus (200), comprising:
a processor (201); and
a memory (202), containing instructions executable by the processor (201);
wherein the second clock distribution apparatus (200) is configured to:
receive information indicating at least one remaining time duration for at least one first clock distribution apparatus (100) keeping a preconfigured accuracy, wherein the at least one first clock distribution apparatus is in a first state, wherein:
- the first state is a holdover state,
- the information indicating the remaining time duration comprises a remaining holdover budget and a drift rate, and
- the remaining time duration is calculated, via subtracting the remaining holdover budget by a transmission path time error, and dividing the subtracted remaining holdover budget by the drift rate; and
select one of the at least one first clock distribution apparatus, based on the information.

12. A third clock distribution apparatus (300), comprising:
a processor (301); and
a memory (302), containing instructions executable by the processor (301);
wherein the third clock distribution apparatus (300) is configured to:
receive information indicating a remaining time duration for a first clock distribution apparatus (100) keeping a preconfigured accuracy, wherein the first clock distribution apparatus is in a first state, wherein:
- the first state is a holdover state, and
- the information indicating the remaining time duration comprises a remaining holdover budget and a drift rate;
update the information indicating the remaining time duration, wherein the remaining time duration is calculated, via subtracting the remaining holdover budget by a transmission path time error, and dividing the subtracted remaining holdover budget by the drift rate; and
transmit the updated information.

## Patentansprüche

1. Verfahren, das von einer ersten Taktverteilungsvorrichtung (100) durchgeführt wird und Folgendes umfasst:
Bestimmen (S101), ob sich die erste Taktverteilungsvorrichtung in einem ersten Zustand befindet, wobei der erste Zustand ein Holdover-Zustand ist;
Erzeugen (S102) von Informationen, die eine verbleibende Zeitdauer für die erste Taktverteilungsvorrichtung angeben, die eine vorkonfigurierte Genauigkeit aufrechterhält, wenn sich die erste Taktverteilungsvorrichtung in dem ersten Zustand befindet, wobei:
- die Informationen, die die verbleibende Zeitdauer angeben, ein verbleibendes Holdover-Budget und eine Driftrate umfassen, und
- die verbleibende Zeitdauer durch Subtrahieren des verbleibenden Holdover-Budgets von einem Übertragungspfadzeitfehler und Teilen des subtrahierten verbleibenden Holdover-Budgets durch die Driftrate berechnet wird, und
Senden (S103) der Informationen, die die verbleibende Zeitdauer angeben.

2. Verfahren nach Anspruch 1,
wobei die erste Taktverteilungsvorrichtung nach dem Verlust einer Synchronisation mit einer Taktquelle in den ersten Zustand eintritt.

3. Verfahren nach Anspruch 2,
wobei die Taktquelle eine Grandmaster-Vorrichtung, GM-Vorrichtung, umfasst.

4. Verfahren nach der Ansprüche 1 bis 3,
wobei die Informationen, die die verbleibende Zeitdauer angeben, in einem Typ-Länge-Wert-Format dargestellt werden.

5. Verfahren nach der Ansprüche 1 bis 4,
wobei die Informationen, die die verbleibende Zeitdauer angeben, in eine Ankündigungsnachricht einbezogen werden.

6. Verfahren nach Anspruch 5,
wobei die Ankündigungsnachricht eine Präzisionszeitprotokollnachricht, PTP-Nachricht, ist.

7. Verfahren nach der Ansprüche 1 bis 6,
wobei die erste Taktverteilungsnachricht Folgendes umfasst: eine Telecom-Boundary-Clock-Vorrichtung, T-BC-Vorrichtung.

8. Verfahren, das von einer zweiten Taktverteilungsvorrichtung (200) durchgeführt wird und Folgendes umfasst:
Empfangen (S201) von Informationen, die mindestens eine verbleibende Zeitdauer für mindestens eine erste Taktverteilungsvorrichtung (100) angeben, die eine vorkonfigurierte Genauigkeit aufrechterhält, wobei sich die mindestens eine erste Taktverteilungsvorrichtung in einem ersten Zustand befindet, wobei:
- der erste Zustand ein Holdover-Zustand ist,
- die Informationen, die die verbleibende Zeitdauer angeben, ein verbleibendes Holdover-Budget und eine Driftrate umfassen, und
- die verbleibende Zeitdauer durch Subtrahieren des verbleibenden Holdover-Budgets von einem Übertragungspfadzeitfehler und Teilen des subtrahierten verbleibenden Holdover-Budgets durch die Driftrate berechnet wird, und
Auswählen (S202) einer von der mindestens einen ersten Taktverteilungsvorrichtung basierend auf den Informationen.

9. Verfahren, das von einer dritten Taktverteilungsvorrichtung (300) durchgeführt wird und Folgendes umfasst:
Empfangen (S301) von Informationen, die eine verbleibende Zeitdauer für eine erste Taktverteilungsvorrichtung (100) angeben, die eine vorkonfigurierte Genauigkeit aufrechterhält, wenn sich die erste Taktverteilungsvorrichtung in einem ersten Zustand befindet, wobei:
- der erste Zustand ein Holdover-Zustand ist, und
- die Informationen, die die verbleibende Zeitdauer angeben, ein verbleibendes Holdover-Budget und eine Driftrate umfassen;
Aktualisieren (S302) der Informationen, die die verbleibende Zeitdauer angeben, wobei die verbleibende Zeitdauer durch Subtrahieren des verbleibenden Holdover-Budgets von einem Übertragungspfadzeitfehler und Teilen des subtrahierten verbleibenden Holdover-Budgets durch die Driftrate berechnet wird; und
Senden (S303) der aktualisierten Informationen.

10. Erste Taktverteilungsvorrichtung (100), umfassend:
einen Prozessor (101); und
einen Speicher (102), der Anweisungen enthält, die von dem Prozessor (101) ausgeführt werden können;
wobei die erste Taktverteilungsvorrichtung (100) zu Folgendem konfiguriert ist:
Bestimmen, ob sich die erste Taktverteilungsvorrichtung in einem ersten Zustand befindet, wobei der erste Zustand ein Holdover-Zustand ist;
Erzeugen von Informationen, die eine verbleibende Zeitdauer für die erste Taktverteilungsvorrichtung angeben, die eine vorkonfigurierte Genauigkeit aufrechterhält, wenn sich die erste Taktverteilungsvorrichtung in dem ersten Zustand befindet, wobei:
- die Informationen, die die verbleibende Zeitdauer angeben, ein verbleibendes Holdover-Budget und eine Driftrate umfassen, und
- die verbleibende Zeitdauer durch Subtrahieren des verbleibenden Holdover-Budgets von einem Übertragungspfadzeitfehler und Teilen des subtrahierten verbleibenden Holdover-Budgets durch die Driftrate berechnet wird, und
Senden der Informationen, die die verbleibende Zeitdauer angeben.

11. Zweite Taktverteilungsvorrichtung (200), umfassend:
einen Prozessor (201); und
einen Speicher (202), der Anweisungen enthält, die von dem Prozessor (201) ausgeführt werden können;
wobei die zweite Taktverteilungsvorrichtung (200) zu Folgendem konfiguriert ist:
Empfangen von Informationen, die mindestens eine verbleibende Zeitdauer für mindestens eine erste Taktverteilungsvorrichtung (100) angeben, die eine vorkonfigurierte Genauigkeit aufrechterhält, wobei sich die mindestens eine erste Taktverteilungsvorrichtung in einem ersten Zustand befindet, wobei:
- der erste Zustand ein Holdover-Zustand ist,
- die Informationen, die die verbleibende Zeitdauer angeben, ein verbleibendes Holdover-Budget und eine Driftrate umfassen, und
- die verbleibende Zeitdauer durch Subtrahieren des verbleibenden Holdover-Budgets von einem Übertragungspfadzeitfehler und Teilen des subtrahierten verbleibenden Holdover-Budgets durch die Driftrate berechnet wird, und Auswählen einer von der mindestens einen ersten Taktverteilungsvorrichtung basierend auf den Informationen.

12. Dritte Taktverteilungsvorrichtung (300), umfassend:
einen Prozessor (301); und
einen Speicher (302), der Anweisungen enthält, die von dem Prozessor (301) ausgeführt werden können;
wobei die dritte Taktverteilungsvorrichtung (300) zu Folgendem konfiguriert ist:
Empfangen von Informationen, die eine verbleibende Zeitdauer für eine erste Taktverteilungsvorrichtung (100) angeben, die eine vorkonfigurierte Genauigkeit aufrechterhält, wenn sich die erste Taktverteilungsvorrichtung in einem ersten Zustand befindet, wobei:
- der erste Zustand ein Holdover-Zustand ist, und
- die Informationen, die die verbleibende Zeitdauer angeben, ein verbleibendes Holdover-Budget und eine Driftrate umfassen;
Aktualisieren der Informationen, die die verbleibende Zeitdauer angeben, wobei die verbleibende Zeitdauer durch Subtrahieren des verbleibenden Holdover-Budgets von einem Übertragungspfadzeitfehler und Teilen des subtrahierten verbleibenden Holdover-Budgets durch die Driftrate berechnet wird; und
Senden der aktualisierten Informationen.

## Revendications

1. Procédé réalisé par un premier appareil de distribution d'horloge (100), comprenant :
la détermination (S101) si le premier appareil de distribution d'horloge se trouve dans un premier état, dans lequel le premier état est un état de maintien ;
la génération (S102) d'informations indiquant une durée restante pendant laquelle le premier appareil de distribution d'horloge garde une précision préconfigurée, dans lequel le premier appareil de distribution d'horloge se trouve dans le premier état,
dans lequel :
- les informations indiquant la durée restante comprennent un budget de maintien restant et un taux de dérive, et
- la durée restante est calculée par soustraction du budget de maintien restant par une erreur de temps de trajet de transmission et par division du budget de maintien restant soustrait par le taux de dérive, et
la transmission (S103) des informations indiquant la durée restante.

2. Procédé selon la revendication 1,
dans lequel le premier appareil de distribution d'horloge entre dans le premier état après avoir perdu une synchronisation avec une source d'horloge.

3. Procédé selon la revendication 2,
dans lequel la source d'horloge comprend un appareil grand-maître, GM.

4. Procédé selon l'une quelconque des revendications 1 à 3,
dans lequel les informations indiquant la durée restante sont présentées dans un format type-longueur-valeur.

5. Procédé selon l'une quelconque des revendications 1 à 4,
dans lequel les informations indiquant la durée restante sont incluses dans un message d'annonce.

6. Procédé selon la revendication 5,
dans lequel le message d'annonce est un message Precision Time Protocol, PTP.

7. Procédé selon l'une quelconque des revendications 1 à 6,
dans lequel le premier appareil de distribution d'horloge comprend : un appareil d'horloge de limite de télécom, T-BC.

8. Procédé réalisé par un deuxième appareil de distribution d'horloge (200), comprenant :
la réception (S201) d'informations indiquant au moins une durée restante pendant laquelle au moins un premier appareil de distribution d'horloge (100) garde une précision préconfigurée, dans lequel l'au moins un premier appareil de distribution d'horloge se trouve dans un premier état, dans lequel :
- le premier état est un état de maintien,
- les informations indiquant la durée restante comprennent un budget de maintien restant et un taux de dérive, et
- la durée restante est calculée par soustraction du budget de maintien restant par une erreur de temps de trajet de transmission et par division du budget de maintien restant soustrait par le taux de dérive ; et
la sélection (S202) de l'un de l'au moins un premier appareil de distribution d'horloge sur la base des informations.

9. Procédé réalisé par un troisième appareil de distribution d'horloge (300), comprenant :
la réception (S301) d'informations indiquant une durée restante pendant laquelle un premier appareil de distribution d'horloge (100) garde une précision préconfigurée, dans lequel le premier appareil de distribution d'horloge se trouve dans un premier état, dans lequel :
- le premier état est un état de maintien, et
- les informations indiquant la durée restante comprennent un budget de maintien restant et un taux de dérive ;
la mise à jour (S302) des informations indiquant la durée restante, dans lequel la durée restante est calculée par soustraction du budget de maintien restant par une erreur de temps de trajet de transmission et par division du budget de maintien restant soustrait par le taux de dérive ; et
la transmission (S303) des informations mises à jour.

10. Premier appareil de distribution d'horloge (100) comprenant :
un processeur (101) ; et
une mémoire (102), contenant des instructions exécutables par le processeur (101) ;
dans lequel le premier appareil de distribution d'horloge (100) est configuré pour :
déterminer si le premier appareil de distribution d'horloge se trouve dans un premier état, dans lequel le premier état est un état de maintien ;
générer des informations indiquant une durée restante pendant laquelle le premier appareil de distribution d'horloge garde une précision préconfigurée, lorsque le premier appareil de distribution d'horloge se trouve dans le premier état, dans lequel :
- les informations indiquant la durée restante comprennent un budget de maintien restant et un taux de dérive, et
- la durée restante est calculée par soustraction du budget de maintien restant par une erreur de temps de trajet de transmission et par division du budget de maintien restant soustrait par le taux de dérive ; et
transmettre les informations indiquant la durée restante.

11. Deuxième appareil de distribution d'horloge (200) comprenant :
un processeur (201) ; et
une mémoire (202), contenant des instructions exécutables par le processeur (201) ;
dans lequel le deuxième appareil de distribution d'horloge (200) est configuré pour :
recevoir des informations indiquant au moins une durée restante pendant laquelle au moins un premier appareil de distribution d'horloge (100) garde une précision préconfigurée, dans lequel l'au moins un premier appareil de distribution d'horloge se trouve dans un premier état, dans lequel :
- le premier état est un état de maintien,
- les informations indiquant la durée restante comprennent un budget de maintien restant et un taux de dérive, et
- la durée restante est calculée par soustraction du budget de maintien restant par une erreur de temps de trajet de transmission et par division du budget de maintien restant soustrait par le taux de dérive ; et
sélectionner l'un de l'au moins un premier appareil de distribution d'horloge sur la base des informations.

12. Troisième appareil de distribution d'horloge (300) comprenant :
un processeur (301) ; et
une mémoire (302), contenant des instructions exécutables par le processeur (301) ;
dans lequel le troisième appareil de distribution d'horloge (300) est configuré pour :
recevoir des informations indiquant une durée restante pendant laquelle un premier appareil de distribution d'horloge (100) garde une précision préconfigurée, dans lequel le premier appareil de distribution d'horloge se trouve dans un premier état, dans lequel :
- le premier état est un état de maintien, et
- les informations indiquant la durée restante comprennent un budget de maintien restant et un taux de dérive ;
mettre à jour les informations indiquant la durée restante, dans lequel la durée restante est calculée par soustraction du budget de maintien restant par une erreur de temps de trajet de transmission et par division du budget de maintien restant soustrait par le taux de dérive ; et
transmettre les informations mises à jour.
